Europäisches Patentamt

European Patent Office

Office européen des brevets

(19)

(11)  **EP 0 758 010 A1**

(12)  **EUROPEAN PATENT APPLICATION**
published in accordance with Art. 158(3) EPC

(43) Date of publication:
**12.02.1997 Bulletin 1997/07**

(21) Application number: **95917478.0**

(22) Date of filing: **26.04.1995**

(51) Int. Cl.$^6$: **C09K 3/00**, C08L 101/00,
C08L 27/18, C08K 3/00,
C08K 5/00, C08F 14/26

(86) International application number:
**PCT/JP95/00834**

(87) International publication number:
**WO 95/29964 (09.11.1995 Gazette 1995/48)**

(84) Designated Contracting States:
**DE FR GB IT**

(30) Priority: **28.04.1994 JP 91992/94**

(71) Applicant: **DAIKIN INDUSTRIES, LTD.**
**Kita-ku, Osaka 530 (JP)**

(72) Inventors:
 • **SHIMIZU, Tetsuo**
  **Yodogawa-seisakusho,**
  **Settu-shi Osaka 566 (JP)**
 • **HOSOKAWA, Kazutaka**
  **Yodogawa-seisakusho,**
  **Settsu-shi Osaka 566 (JP)**

(74) Representative: **Türk, Gille, Hrabal, Leifert**
 **Brucknerstrasse 20**
 **40593 Düsseldorf (DE)**

(54)  **DRIPPING INHIBITOR AND FLAME-RETARDANT RESIN COMPOSITION**

(57)  To provide the anti-drip agent containing fine particles having a core/shell structure, in which the core portion is a high molecular weight polytetrafluoroethylene, the shell portion is a low molecular weight polytetrafluoroethylene and an average particle size of the fine particles is from 0.05 to 1 μm; and a flame retarded thermoplastic resin composition comprising a flammable thermoplastic resin, the above-mentioned anti-drip agent and a flame retardant. The anti-drip agent is excellent in anti-drip property, and the flame retarded resin composition is excellent in workability and mold releasing property from die and gives molded articles having excellent flame resistance and good external appearance.

## Description

TECHNICAL FIELD

The present invention relates to an anti-drip agent for endowing a flammable thermoplastic resin with anti-drip property when the resin is burnt and relates to a flame retarded resin composition comprising the above-mentioned resin, an anti-drip agent and a flame retardant, having good workability, excellent mold releasing property from die and excellent flame resistance, and giving good external appearance to molded articles. The anti-drip agent and flame retarded resin composition of the present invention are used suitably for molded articles in the field of household electric appliances and office automation equipments.

BACKGROUND ART

Since many of thermoplastic resins for molded articles such as electric appliances and office automation equipments which have been hitherto employed in homes, offices, factories, etc., are normally flammable, a measure to enhance flame resistance of the molded resin articles usually by adding a flame retardant to molding materials is required.

However, though many of flame retardants give an effect of making burning difficult, once the burning starts, they have poor effect as to preventing the thermoplastic resin from becoming a liquid form, dripping with burning, and spreading burning.

On that point, for example, standards of Underwriters' Laboratory (hereinafter referred to as "UL") 94 provide for higher ratings (V-1, V-0) of flame resistance, which are conditioned on anti-drip property, as ratings for the flammability test.

Also there have been conducted attempts to melt-mix a polytetrafluoroethylene (PTFE) powder or an aqueous dispersion thereof together with the flame retardant into a flammable thermoplastic resin in order to prevent the dripping and further enhance safety.

For example, JP-A-44241/1975 discloses a composition prepared by adding 0.1 to 5 % (% by weight, hereinafter the same) of PTFE together with a flame retardant and nonflammable fibers to a flammable thermoplastic resin; JP-B-36657/1984 discloses a composition prepared by adding a flame retardant and PTFE to polyphenylene ether or styrene resin; JP-B-38418/1985 discloses a composition prepared by adding 0.01 to 10 % of a flame retardant of organic alkali metal salt and/or organic alkali earth metal salt and 0.01 to 2.0 % of PTFE of ASTM D-1457 type 3 to aromatic polycarbonate; and JP-B-58629/1987 discloses a composition prepared by adding a flame retardant and PTFE to an acrylonitrile-butadiene-styrene copolymer (ABS). Also with respect to a polymer alloy of an aromatic polycarbonate and styrene resin, JP-B-60181/1989 discloses a composition prepared by adding an organobromine compound, a flame retardant such as an antimony compound or a bismuth compound and PTFE; JP-A-55145/1986, JP-A-261352/1986, JP-A-278961/1988, JP-A-32154/1990, etc. disclose a composition prepared by adding PTFE together with a phosphorus compound; and JP-A-127759/1986 discloses a composition prepared by adding PTFE together with an alkali metal salt of organic or inorganic acid. Also with respect to polyamide, for example, JP-A-186686/1993 discloses a composition prepared by adding PTFE together with a flame retardant such as a phosphorus ester.

As PTFE for preventing the dripping, there are used powders obtained by coagulating and drying a latex prepared by emulsion polymerization of tetrafluoroethylene (generally called "PTFE fine powder" and classified into ASTM D-1457 type 3) or an aqueous dispersion produced by condensing and stabilizing the above latex by adding a surfactant (generally called "PTFE dispersion") (for example, JP-B-60181/1989, JP-A-55145/1986, JP-A-261352/1986, JP-A-278961/1988, JP-A-32154/1990 and JP-A-127759/1986). The above-mentioned fine powder is usually processed into a tube, pipe or tape form through paste extrusion molding, and the above-mentioned dispersion is processed into various articles through impregnation and coating. Both of them are used for applications making the best use of heat resistance, non-stickiness, sliding resistance, water- and oil-repelling properties, electrical characteristics, corrosion resistance, weatherability and the like which PTFE posssesses. The above-mentioned fine powder is agglomerated powders of PTFE fine particles prepared through emulsion polymerization and having an average particle size of 0.05 to 1.0 $\mu$m, and the above-mentioned dispersion is one in which those fine particles are dispersed in water. Both of the above-mentioned powder and dispersion contain PTFE fine particles basically.

Function to prevent the dripping is exhibited according to that the PTFE fine particles prepared through emulsion polymerization have property of being easily fibrilated. That is, when the above-mentioned fine powder or dispersion is mixed with the molten thermoplastic resin, the PTFE fine particles are fibrilated by shearing force during mixing and the fibrilated PTFE is dispersed into the thermoplastic resin. Since the fibrilated PTFE remains as dispersed in the final molded products, the dripping is prevented when burning occurs.

However, in order to mix the flammable thermoplastic resin with PTFE, it is necessary to, prior to melt-mixing, mix the flammable thermoplastic resin in the form of powder, pellet or liquid with the above-mentioned fine powder or dispersion. But since the fine powder mentioned above has property of being easily fibrilated even at normal temperature, its powder flowability is inferior and there is a problem with workability in mixing. When the flammable thermoplastic resin is an aqueous dispersion, mixing with the dispersion mentioned above is easy, but when the resin is in the form of powder or pellet, it becomes necessary to take a step of removing unnecessary water in the dispersion and a surfactant after the mixing.

Also when the flammable thermoplastic resin is kneaded with PTFE under molten condition in a kneader, often there is a case where its melt viscosity increases due to excessive fibrilation and a load on the kneader becomes too big. Also there is a case where PTFE are entangled with each other due to excessive fibrilation and are not dispersed uniformly into the thermoplastic resin. In such a case, a strand extruded from the kneader breaks during the course of the extrusion, and the kneading workability is lowered significantly.

Poor dispersibility due to agglomeration of fibrils in the flammable thermoplastic resin becomes a cause for making external appearance of molded articles not good, which occurs particularly remarkably in case of thin molded articles.

Though the flame retardant is essential for letting the flammable thermoplastic resin have flame resistance, when the flame retardant is used, there is a general tendency that physical properties of the resin are lowered, and cost is economically higher. Though the above-mentioned PTFE fine particles are relatively costly, since an adding amount of them is small, if dispersibility of the particles in the resin can be improved, it appears that cost reduction can be attained without lowering flame resistance on the whole even if the amount of the flame retardant is reduced to a certain extent.

On the contrary, instead of the PTFE fine particles constituting ASTM D-1457 type 3 powders, there have been made proposals to solve the above-mentioned problem by employing, as an additive, PTFE type fine particles having a specific structure.

For example, the WO 94/1475 publication discloses that to prevent the dripping, it is effective to use fine particles having a core-shell structure like the fine particles constituting the anti-drip agent of the present invention and comprising a core portion of a fibril-forming PTFE and a shell portion of a non-fibril-forming vinylidene fluoride resin (PVDF). Also JP-A-247408/1989 and JP-A-279579/1993 disclose a core-shell structure, in which the core comprises PTFE and the shell comprises PTFE modified by copolymerizing with hexafluoropropylene, perfluorobutylethylene, perfluoro(methyl vinyl ether) or perfluoro(propyl vinyl ether).

However, the fine particles disclosed in the above-mentioned WO 94/1475 and JP-A-247408/1989 have greatly improved dispersibility and workability when added to the flammable thermoplastic resin, as compared with conventional PTFE, but still have some unsolved problems. When the fine particles described in WO 94/1475 are added to the flammable thermoplastic resin to give a flame retarded composition, there is a case where an adverse effect is produced by PVDF introduced as the shell portion. In the flame retarded composition in which the conventional PTFE is added, the dispersed PTFE gives other effects than the anti-drip effect, for example, effects of improving mold releasing property from die, friction characteristics of molded article, and the like. However, PVDF makes those properties disappear. PVDF is changed chemically depending on the kind of a flame retardant, and then causes unnecessary coloration.

On the other hand, the fine particles described in JP-A-247408/1989 and JP-A-279579/1993 have workability and dispersibility improved to a large extent, but important anti-drip property is not sufficient. Namely, in the patent specifications of the above-mentioned patent publications there is stated that the fine particles mentioned above are suitable for blending with a resin or elastomer. However, a main effect of blending is to improve mechanical properties of the resin or elastomer by the particles in the form of a rectangular small pellet which were deformed when kneaded with the resin or the elastomer. And with respect to the anti-drip property, there is simply raised an example of only ethylene-tetrafluoroethylene (ETFE) copolymer. Because those fine powders are in the form of a pellet, it is necessary to add larger amount than usual in order to obtain sufficient anti-drip property.

As the fine particles similar to those constituting the anti-drip agent of the present invention, that is, fine particles comprising a core of a fibril-forming PTFE and a shell of a non-fibril-forming resin or rubber, there are known some others than mentioned above.

For example, JP-B-63584/1988 discloses fine particles having a core of PTFE and a shell of tetrafluoroethylene(TFE)-chlorotrifluoroethylene(CTFE) copolymer. That patent publication states that the fine particles disclosed therein exhibit excellent stability as a dispersion in an organic solvent (hereinafter referred to as "organosol) and are useful as a paint, but there is no description to the effect that those fine particles are useful as the anti-drip agent of the present invention. With respect to similar fine particles having the core-shell structure, there were filed some patent applications disclosing their usefulness as organosol. For example, JP-A-284201/1988 describes fine particles having a core-shell structure and prepared by coating PTFE fine particles with a polymer of an acrylate and/or methacrylate having polyfluoroalkyl group, and JP-A-312836/1988 describes fine particles having a core-shell structure and prepared by coating PTFE fine particles with a polymer such as $\alpha$, $\beta$-unsaturated carboxylate. Neither of those patent publications describes the use of fine particles as the anti-drip agent.

In addition, there are known not only the use of fine particles as the organosol being excellent in stability but also an attempt to enhance dispersibility by mixing, with a thermoplastic resin, a powder prepared by agglomerating and drying fine particles having a core-shell structure. For example, JP-A-158651/1990 discloses that fine particles having a core-shell structure and comprising a core of PTFE and a shell of at least one selected from ETFE copolymer, ethylene-CTFE copolymer and vinylidene fluoride-hexafluoroisobutene copolymer, are excellent in dispersibility in a thermoplastic resin. JP-A-274711/1990 discloses that fine particles having a core-shell structure and comprising a core of the same PTFE as above and a shell of a fluorine-containing methacrylic resin having a high glass transition temperature, are excellent in dispersibility in a thermoplastic resin. However, in those patent specifications, though a general effect on flame resistance is described, no concrete description stating usefulness for the drip prevention is found.

The fine particles having a core-shell structure of JP-B-63584/1988 and JP-A-158651/1990 are excellent in workability and dispersibility and have a good effect on the drip prevention, irrespective of whether or not such particles are described in those patent specifications. However, because the shell portion does not comprise PTFE, for example, mold releasing property from die and friction characteristics of molded articles are not good, and a flame retardant chemically reacts with components of the shell portion, depending on the kind thereof.

Also JP-A-232109/1984 discloses fine particles having a core-shell structure and comprising a core of PTFE and a shell of a fluorine-containing rubber. The PTFE of the core portion has fibril-forming property, and has anti-drip property when fine powders are mixed with a thermoplastic resin. Since a powder prepared by agglomerating and drying the above-mentioned fine particles has a rubber-like surface, such a powder is inferior in flowability and is not suitable for improving workability which is one of the problems to be solved by the present invention.

An object of the present invention is to provide an anti-drip agent having improved workability and dispersibility mentioned above and excellent flame resistance and giving molded articles having good external appearance without losing mold releasing property, low friction property and chemical resistance which are advantages of conventional PTFE, and to provide a flame retarded resin composition.

DISCLOSURE OF THE INVENTION

The present inventors have found that the above-mentioned problems can be solved by employing, as an anti-drip agent, fine particles having a specific structure.

Namely, the present invention relates to the anti-drip agent which comprises fine particles having a core portion and a shell portion, in which the core portion is a fibril-forming high molecular weight PTFE, the shell portion is a non-fibril-forming low molecular weight PTFE and an average particle size of the fine particles is from 0.05 to 1 $\mu$m, and endowing a flammable thermoplastic resin with anti-drip property.

It is preferable that a standard specific gravity of the fibril-forming high molecular weight polytetrafluoroethylene of the above-mentioned core portion is not more than 2.230, an average molecular weight of the non-fibril-forming low molecular weight polytetrafluoroethylene of the above-mentioned shell portion is from $1 \times 10^4$ to $8 \times 10^5$ and a weight ratio of the core portion to the shell portion is 95:5 to 30:70.

It is preferable that the anti-drip agent is one comprising a powder prepared by agglomerating the above-mentioned fine particles.

It is preferable that the above-mentioned flammable thermoplastic resin is at least one selected from the group consisting of polycarbonate resins, polystyrene resins and polyester resins.

The present invention also relates to the flame retarded resin composition which comprises 100 parts by weight of the above-mentioned flammable thermoplastic resin; 0.01 to 5 parts by weight of the anti-drip agent comprising fine particles having the core portion and shell portion, in which the core portion is the fibril-forming high molecular weight PTFE, the shell portion is the non-fibril-forming low molecular weight PTFE and an average particle size is from 0.05 to 1 $\mu$m; and 0.001 to 40 parts by weight of the flame retardant.

BEST MODE FOR CARRYING OUT THE INVENTION

As the fine particles of the present invention comprising the core portion and the shell portion, in which the core portion comprises the fibril-forming high molecular weight PTFE, the shell portion comprises the non-fibril-forming low molecular weight PTFE and the average particle size of the fine particles is from 0.05 to 1 $\mu$m, there are suitably used polytetrafluoroethylene fine particles and powders as described, for example, in JP-A-154842/1992. The fine particles suitably used are in the form of liquid dispersion in which the fine particles are dispersed in water or in an organic solvent as case demands, or in the form of powder prepared by coagulating and drying the liquid dispersion containing fine particles. Among the liquid dispersions, the particles are suitable for mixing in the form of aqueous dispersion, when the flammable thermoplastic resin is obtained in the form of emulsion-polymerized dispersion. For example, polystyrene resins, acrylic resins, polyolefin resins, polyvinyl chloride resins and the like are obtained in the form of emulsion-polymerized dispersion. When aqueous dispersions are mixed with each other, usually the mixture is subjected to co-coagulation, drying to give a powder and then molding. The content of the fine particles when dispersed in water is from 5 to 50 %, preferably from 10 to 40 %. The standard specific gravity (ASTM D-1457) of the above-mentioned high molecular weight PTFE is not more than 2.230, usually from 2.130 to 2.230, preferably from 2.130 to 2.210, more preferably from 2.149 to 2.200. The smaller the standard specific gravity is, the higher the molecular weight is. When exceeding 2.210, particularly exceeding 2.230, fibrilation is insufficient. A number average molecular weight of the high molecular weight

4

PTFE having the standard specific gravity of 2.149 to 2.200 is from about $22 \times 10^5$ to about $9 \times 10^6$ when calculated by the following equation. The molecular weight of the high molecular weight PTFE depends on only whether the production is easy or not since any larger upper limit of it may be taken with respect to fibrilation property.

Equation: $\log_{10}$ (number average molecular weight) = 31.83-11.58 × (standard specific gravity)

Also the above-mentioned high molecular weight PTFE may be a so-called modified PTFE prepared by copolymerizing with 0.001 to 1.0 %, preferably 0.001 to 0.5 % of fluoroolefin, for example, chlorotrifluoroethylene, hexafluoropropene, fluoroalkylethylene, fluoroalkylfluorovinylether, or the like. On the contrary, the above-mentioned low molecular weight PTFE has an average molecular weight of $1 \times 10^4$ to $8 \times 10^5$. When the average molecular weight is around several thousands, there is no problem with its substantial properties, but since it has sublimation property, there is a tendency that it is difficult to be handled. When the average molecular weight is more than $8 \times 10^5$, a tendency of fibrilation appears slightly.

It is to be noted that the range of a molecular weight is very difficult to measure, and the above-mentioned molecular weight ranges are not strict values. It is essential to note generally that PTFE, when its molecular weight becomes low, has property of losing its fibrilation ability, and the fibrilation cannot be made completely. It can be confirmed by a paste extrusion test that the fibrilation cannot be made. The fact that a continuous extrudate cannot be obtained in the paste extrusion test becomes a criterion for judging PTFE to be a low molecular weight PTFE.

In the paste extrusion test, as described in JP-A-154842/1992, 50 g of PTFE and 10.8 g of a lubricant, i.e. hydrocarbon oil (available from Idemitsu Sekiyu Kagaku Kabushiki Kaisha, tradename: IP1620) are mixed in a glass bottle, followed by aging at room temperature (25°C ± 2°C) for one hour. Then the mixture is filled in an extrusion die (having a squeezing angle of 30 degrees and being equipped with an orifice having an inner diameter of 2.54 mm and a land length of 7 mm on the bottom of the die) with a cylinder (inner diameter: 25.4 mm), and a load of 60 kg is applied to a piston inserted in the cylinder and maintained for one minute. Immediately after that, the mixture is extruded at room temperature at a ram speed of 20 mm/min (speed of pushing the piston downward), and a judgement is made as to if a continuous extrudate can be obtained. In the above-mentioned fine particles having the core-shell structure, the weight ratio of the core to the shell is 95/5 to 30/70, preferably 90/10 to 50/50. When the core is less than 30, the fibrilation tends to be insufficient and anti-drip property tends not to be enough. When more than 95, there is a tendency that the fibrilation occurs exceedingly and workability and external appearance of molded articles become poor. Also the number average particle size of the above-mentioned fine particles is from 0.05 to 1 μm, preferably from 0.1 to 0.5 μm. In the present invention, the above-mentioned fine particles can be used being granulated to an average particle size of 1 to 500 μm for example, through a method of coagulation and drying of an aqueous dispersion obtained by emulsion polymerizing or a method of spray-drying and freeze-drying of the aqueous dispersion.

Examples of the flammable thermoplastic resin are, for instance, polyolefin resins (polyethylene, polypropylene, polymethylpentene or the like), polyvinyl chloride, polystyrene resins (polystyrene, impact resistant polystyrene, AS, ABS or the like), polycarbonate (PC) resins (PC polymer alloy such as PC or PC/ABS), polyamide resins (nylon, whole aromatic polyamide or the like), polyester resins (polybutyleneterephthalate, polyethyleneterephthalate, whole aromatic polyester or the like), acrylic resins (polymethyl methacrylate, polyacrylonitrile or the like), polyacetal, polyether ether ketone, modified polyphenylene ether, polyarylene sulfide resin, polysulfone resin, other various polymer alloys and the like. Those resins are employed particularly for applications requiring a high level of flame resistance, for example, housings and various mechanical parts of household electric appliances and office automation equipments. When the resins, for example, PC, PC polymer alloy, polystyrene resins, polybutyleneterephthalate, polyethyleneterephthalate, modified polyphenylene ether or the like are used, an excellent anti-drip effect can be exhibited.

A mixing amount of the anti-drip agent of the present invention is from 0.01 to 5 parts (part by weight, hereinafter the same), preferably from 0.03 to 2 parts on the basis of 100 parts of the flammable thermoplastic resin. When less than 0.01 part, there is a tendency that the desired anti-drip property cannot be obtained. When more than 5 parts, there is a tendency that poor dispersion of the anti-drip agent in the resin occurs while the anti-drip property, mold releasing property from die and friction property of molded articles are enhanced.

The represented examples of the flame retardant of the present invention are, for example, a compound containing 5B group in the periodic table such as nitrogen, phophorus, antimony and bismuth, a compound containing halogen compound of 7B group and the like. Examples of the halogen compound are a halogen-containing aliphatic compound, halogen-containing alicyclic compound and halogen-containing aromatic compound, and are, for instance, bromine-containing compounds such as tetrabromobisphenol A (TBA), decabromodiphenyl ether (DBDPE), octabromodiphenyl ether (OBDPE), TBA epoxy/phenoxy oligomer and brominated crosslinked polystyrene, chlorine-containing compounds such as chlorinated paraffin and perchlorocyclopentadecane, and the like. Examples of the phosphorus compound are phosphate, polyphosphate and the like. It is preferable that an antimony compound is used in combination with a halogen-containing compound. Examples thereof are antimony trioxide, antimony pentoxide and the like. In addition, aluminium hydroxide, magnesium hydroxide and molyodenum trioxide can also be used. At least one of those flame retardants and its mixing amount can be optionally selected depending on the kind of the flammable thermoplas-

5

tic resin, but are not limited thereto. The mixing amount of the flame retardant is usually from 0.001 to 40 parts, preferably from 0.01 to 30 parts on the basis of 100 parts of the above-mentioned resin. When less than 0.001 part, an effect on the flame resistance tends to become insufficient, and when more than 40 parts, it is not economical and mechanical properties (impact resistance, etc.) tend to be lowered.

The flame retarded resin composition of the present invention comprises the flammable thermoplastic resin, the anti-drip agent of the present invention and the flame retardant. This composition can be prepared by blending each component by known method. There is no limitation as to preparation procedures, for example, order of blending, whether the blending is made in the form of powder or dispersion, and kind of blending apparatuses and combination thereof. With respect to method of blending, there can be employed various methods such as a method of previously mixing the flame retardant with the anti-drip agent of the present invention and then feeding the mixture and the resin into a kneader and a method of mixing the anti-drip agent of the present invention in the form of aqueous dispersion or organosol into the flammable thermoplastic resin, a part or the whole of which is an aqueous dispersion or organosol. The method of blending is not limited thereto.

In addition to the flame retardant and the anti-drip agent, to the flame retarded resin composition of the present invention can be added, if necessary, known additives, for example, an ultraviolet absorbing agent, antioxidant, pigment, molding auxiliary, calcium carbonate, glass fiber and the like.

The anti-drip agent and flame retarded resin composition of the present invention are then explained with Examples and Preparation Examples, and the present invention is not limited thereto.

Example 1

(Preparation Example)

An aqueous dispersion containing 16.9 % of fine particles having a core-shell structure (weight ratio of core/shell: 70/30), in which a number average particle size is 0.19 $\mu$m, a standard specific gravity of the core portion is 2.170 and an average molecular weight of the shell portion is $1.8 \times 10^4$, was prepared in accordance with Example 2 of JP-A-154842/1992. Nitric acid was added to the above-mentioned dispersion, followed by stirring, coagulating, rinsing with water and then drying at 140°C for 15 hours. An average particle size of the obtained powders is 5 $\mu$m. When the paste extrusion test was carried out by using the obtained powders, an uncontinuous extrudate was obtained, and it was clear that the shell portion comprises a low molecular weight PTFE which is not fibrilated.

A tumbler was charged with 100 parts of an impact resistant polystyrene resin (available from Asahi Kasei Kogyo Kabushiki Kaisha, tradename: Styron 492) as the flammable thermoplastic resin, 1 part of polytetrafluoroethylene powders prepared in Preparation Example, and as the flame retardant, 17.5 parts of tetrabromobisphenol A (available from Teijin Kasei Kabushiki Kaisha, tradename Fireguard FG 2000) and 3.5 parts of antimony trioxide (available from Nippon Seiko Kabushiki Kaisha, tradename: ATOX-3) to premix them at room temperature for 20 minutes. Then the mixture was fed to a screw feeder of a biaxial kneading extruder (total length: 1,340 mm, screw length/diameter = 33.5). A flame retarded resin composition of the present invention was prepared under kneading and extruding conditions of the number of screw rotations of 100 rpm and a feeding amount of 20 kg/hr. Then strip-like test pieces (5 inch long, 1/2 inch wide, 1/8 inch thick) were prepared from the obtained composition by using an injection molding machine (available from Nippon Seikosho Kabushiki Kaisha, model name: N40-BII ), and the following tests were conducted. The results are shown in Table 1.

The tests were carried out in such a manner as mentioned below.

Workability: The above-mentioned composition was evaluated from the whole aspect, such as stability of feeding the premixed material to the screw feeder of the kneader and stability of extruding a strand from the extruder. When stable workability can be obtained, it is evaluated to be good (+), and when the feeding of the material is stopped due to bridging of the material or the strand is cut, it is evaluated to be not good (-).

Mold releasing property from die: When the test piece is easily taken out of the die, it is evaluated to be good (+), and when in some cases, the test piece remains in the die, it is evaluated to be not good (-).

External appearance of molded articles: The surface of the test piece is checked with naked eyes to observe a degree of its roughness. When the surface is smooth, it is evaluated to be good (+), and when the surface is rough, it is evaluated to be not good (-).

Flame resistance: Tests were conducted in accordance with UL94 (Method of a flammability test of plastics). Based on the test results of five test pieces, evaluation was made with three ratings of flame resistance, that is, UL94V-0, UL94V-1 and UL94V-2. The ratings of UL94 and criteria for judgement are mentioned below:

UL94V-0: satisfies any one of the criteria (a), (c), (e), (f) and (h) mentioned below.
UL94V-1: satisfies any one of the criteria (b), (d), (e), (g) and (h) mentioned below.
UL94V-2: satisfies any one of the criteria (b), (d), (g) and (h) mentioned below.

(a): No test piece burns for not less than ten seconds after first flame application.

(b): No test piece burns for not less than 30 seconds after first flame application.

(c): A total flaming combustion time is not more than 50 seconds for the 10 flame applications for each set of 5 test pieces.

(d): A total flaming combustion time is not more than 250 seconds for the 10 flame applications for each set of 5 test pieces.

(e): Test pieces do not drip flame particles which ignite an absorbent cotton placed 12 inches beneath the test piece.

(f): No test piece glows for not more than 30 seconds after the second removal of the flame.

(g): No test piece glows for not more than 60 seconds after the second removal of the flame.

(h): No test piece burns with flaming or glowing combustion up to the holding clamp.

Example 2

A flame retarded resin composition of the present invention was prepared in the same manner as in Example 1 except that an amount of polytetrafluoroethylene powder was 0.1 part. Strip-like test pieces were then prepared from the obtained composition, and the same tests as in Example 1 were carried out. The results are shown in Table 1.

Example 3

A flame retarded resin composition of the present invention was prepared in the same manner as in Example 1 except that there were used 100 parts of a polycarbonate resin (available from Idemitsu Sekiyu Kagaku Kabushiki Kaisha, tradename: Toughlon A2200) as the flammable thermoplastic resin, 0.5 part of polytetrafluoroethylene powder and 2.5 parts of tetrabromobisphenol A (available from Teijin Kasei Kabushiki Kaisha, tradename: Fireguard FG7000) as the flame retardant. Strip-like test pieces were then prepared from the obtained composition, and the same tests as in Example 1 were carried out. The results are shown in Table 1.

Example 4

A flame retarded resin composition of the present invention was prepared in the same manner as in Example 1 except that 100 parts of polybutyleneterephthalate resin (available from Polyplastics Kabushiki Kaisha, tradename: Duranex 2002) as the flammable thermoplastic resin, 0.5 part of polytetrafluoroethylene powder and, as the flame retardant, 12 parts of decabromodiphenyl ether (available from Kabushiki Kaisha Interchem, tradename: SAYTEX 120(E)) and 3.5 parts of antimony trioxide (available from Nippon Seiko Kabushiki Kaisha, tradename: ATOX-S). Strip-like test pieces were then prepared from the obtained composition, and the same tests as in Example 1 were carried out. The results are shown in Table 1.

Table 1

| (Values are in part by weight) | | | | |
|---|---|---|---|---|
| | Ex.1 | Ex.2 | Ex.3 | Ex.4 |
| Impact resistant polystyrene (Part) | 100 | 100 | - | - |
| Polycarbonate (Part) | - | - | 100 | - |
| Polybutyleneterephthalate (Part) | - | - | - | 100 |
| Polytetrafluoroethylene powders (Part) | 1 | 0.1 | 0.5 | 0.5 |
| Flame retardant | | | | |
| TBA | 17.5 | 17.5 | 2.5 | - |
| DBDPE | - | - | - | 12 |
| Antimony trioxide | 3.5 | 3.5 | - | 3.5 |
| Tests | | | | |
| Workability | + | + | + | + |
| Mold releasing property from die | + | + | + | + |
| External appearance of molded articles | + | + | + | + |
| Flame resistance (UL94) | V-0 | V-0 | V-0 | V-0 |

Comparative Example 1

A resin composition was prepared in the same manner as in Example 1 except that the polytetrafluoroethylene powder was not added. Strip-like test pieces were then prepared from the obtained composition, and the same tests as in Example 1 were carried out. The results are shown in Table 2. Mold releasing property from die was inferior to that of Examples 1 and 2. Dripping occurred in the flammability test and the rating was V-2.

Comparative Example 2

A flame retarded resin composition was prepared in the same manner as in Example 3 except that as the polytetrafluoroethylene powder, a commercially available fine powder (available from Daikin Industries, Ltd., tradename: Polyflon TFE fine powder F-104) was used. Strip-like test pieces were then prepared from the obtained composition, and the same tests as in Example 3 were carried out. The results are shown in Table 2.

Comparative Example 3

A flame retarded resin composition was prepared in the same manner as in Example 3 except that as the polytetrafluoroethylene powder, a commercially available low molecular weight powder (available from Daikin Industries, Ltd., tradename: Lubron L-5) was used. Strip-like test pieces were then prepared from the obtained composition, and the same tests as in Example 3 were carried out. The results are shown in Table 2.

Table 2

| (Values are in part by weight) | | | |
| --- | --- | --- | --- |
| | Com. Ex.1 | Com. Ex.2 | Com. Ex.3 |
| Impact resistant polystyrene (Part) | 100 | - | - |
| Polycarbonate (Part) | - | 100 | 100 |
| Polytetrafluoroethylene powders (Part) | 0 | 0.5 | 0.5 |
| Flame retardant | | | |
| TBA | 17.5 | 2.5 | 2.5 |
| DBDPE | - | - | - |
| Antimony trioxide | 3.5 | - | - |
| Tests | | | |
| Workability | + | - | + |
| Mold releasing property from die | - | + | + |
| External appearance of molded articles | + | - | + |
| Flame resistance (UL94) | V-2 | V-0 | V-2 |

Evaluations in Table 2 were made in the same manner as in Table 1.

INDUSTRIAL APPLICABILITY

The anti-drip agent of the present invention is excellent in anti-drip property. Also the flame retarded resin composition of the present invention is excellent in workability and mold releasing property from die, and the molded articles have excellent flame resistance and good external appearance and thus, are used suitably for applications to household electric appliances and office automation equipments.

**Claims**

1. An anti-drip agent for endowing a flammable thermoplastic resin with anti-drip property, which comprises fine particles having a core-shell structure, wherein the core portion is a fibril-forming high molecular weight polytetrafluoroethylene, the shell portion is a non-fibril-forming low molecular weight polytetrafluoroethylene and an average particle size of the fine particles is from 0.05 to 1 $\mu$m.

2. The anti-drip agent of Claim 1, wherein a standard specific gravity of the fibril-forming high molecular weight polytetrafluoroethylene of the core portion is not more than 2.230, an average molecular weight of the non-fibril-forming low molecular weight polytetrafluoroethylene is from $1 \times 10^4$ to $8 \times 10^5$ and a weight ratio of the core portion to the shell portion is from 95:5 to 30:70.

3. The anti-drip agent of Claim 1, which is prepared by agglomeration of fine particles.

4. The anti-drip agent of Claim 1, wherein said flammable thermoplastic resin is at least one selected from the group consisting of polycarbonate resins, polystyrene resins and polyester resins.

5. A flame retarded resin composition comprising 100 parts by weight of a flammable thermoplastic resin, 0.01 to 5 parts by weight of an anti-drip agent which comprises fine particles having a core portion and a shell portion, wherein the core portion is a fibril-forming high molecular weight polytetrafluoroethylene, the shell portion is a non-fibril-forming low molecular weight polytetrafluoroethylene and an average particle size of the fine particles is from 0.05 to 1 $\mu$m, and 0.001 to 40 parts by weight of a flame retardant.

## INTERNATIONAL SEARCH REPORT

International application No.

PCT/JP95/00834

### A. CLASSIFICATION OF SUBJECT MATTER

Int. Cl$^6$ C09K3/00, C08L101/00, C08L27/18, C08K3/00, C08K5/00, C08F14/26

According to International Patent Classification (IPC) or to both national classification and IPC

### B. FIELDS SEARCHED

Minimum documentation searched (classification system followed by classification symbols)

Int. Cl$^6$ C09K3/00, C08L101/00, C08L27/18, C08K3/00, C08K5/00, C08F14/26

Documentation searched other than minimum documentation to the extent that such documents are included in the fields searched

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP, 4-154842, A (Daikin Industries, Ltd.), May 27, 1992 (27. 05. 92) &EP, 481509, A3 & US, 5324785, A | 1 - 5 |
| A | JP, 4-222859, A (SHELL INT. RES. MIJ. BV), August 12, 1992 (12. 08. 92) &EP, 448176, A & CA, 2038643, A | 1 - 5 |
| A | JP, 6-73137, A (Daikin Industies, Ltd.), March 15, 1994 (15. 03. 94) &WO, 9401475, A1 & EP, 606493, A1 | 1 - 5 |

☐ Further documents are listed in the continuation of Box C.　　☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| July 19, 1995 (19. 07. 95) | August 8, 1995 (08. 08. 95) |

| Name and mailing address of the ISA/ Japanese Patent Office | Authorized officer |
|---|---|
| Facsimile No. | Telephone No. |

Form PCT/ISA/210 (second sheet) (July 1992)